# EUROPEAN PATENT SPECIFICATION

(11) **EP 1 880 786 B1**
(45) Date of publication and mention of the grant of the patent: **22.04.2009**
(21) Application number: 07013970.4
(22) Date of filing: 17.07.2007
(51) Int. Cl.: B23D 47/04, B25B 5/10

(54) **Vise mechanism incorporated in cutting machine**
Schraubstockmechanismus als Teil einer Schneidemaschine
Mécanisme d'étau incorporé dans une découpeuse

(30) Priority: 19.07.2006 JP 2006197313
(43) Date of publication of application: 23.01.2008
(73) Proprietor: Makita Corporation, Anjo-shi, Aichi-ken (JP)
(72) Inventor: Utsuno, Atsushi, Anjo-shi Aichi (JP); Abe, Kenji, Anjo-shi Aichi (JP)
(74) Representative: Kramer - Barske - Schmidtchen

(56) References cited:
- EP-A- 0 585 841
- EP-A- 0 852 990
- US-A- 2 546 336
- US-A- 2 671 482
- US-B1- 6 250 621

## Description

### BACKGROUND

The present invention relates to a vise mechanism for fixing a work to be cut by a cutting machine such as a bench circular sawing machine structured such that a main body including a cutting blade rotatable by motor and movable in the vertical direction is provided on a base for supporting the work thereon.

Such a cutting blade is usually urged to its upper limit position, and is moved down with respect to the work supported on the base to perform cutting. The base is provided with fences against which the work is abutted to be placed in a prescribed cutting position. Further, the base is provided with a vise mechanism for fixing the work placed in the cutting position.

Japanese Patent No. 26131568 discloses one example of such a vise mechanism. Specifically, there is erected a supporting rod on a holder additionally provided on the lateral side of the base. A horizontal bracket extending extend beyond the fence is connected to the upper end of the supporting rod. A clamping screw (a vise rod) extending vertically and including a knob on the upper end thereof and a clamper on the lower end thereof is screwed to an end portion of the bracket, whereby the work on the holder can be fixed from above at an arbitrary position by operating the clamping screw.

On the other hand, in a vise mechanism disclosed in European Patent Publication No. 852990A1, a button is engaged with a clamping rod at an end portion of a bracket while being urged by a coiled spring disposed within the bracket, so that the vertical movement of the clamping rod is restricted by the urging force of the coiled spring. By pressing the button against the urging force of the coiled spring, the restriction is released to allow to perform height adjustment of the clamping rod with respect to a work.

In the vise mechanism disclosed in Japanese Patent No. 2613156B, when carrying out the operation to fix the work and the operation to cancel the fixed state of the work, it is necessary to move up or down the vice mechanism by rotating the clamping screw manually. Thus, the workability is not so good.

In the vise mechanism disclosed in European Patent Publication No. 852990A1, since the clamping rod freely drops with the cancellation of the engagement with the coiled spring when the button is pushed, it is necessary to hold the clamping rod with one hand, while the button is pushed with the other hand. Owing to this, it is not possible to carry out, for example, an operation that, while holding the work with one hand, the height of the clamping rod is adjusted with the other hand. This worsens the workability of the vise mechanism.

US 6,250,621 B1 discloses a vise mechanism according to the preamble of claim 1.

### SUMMARY

It is therefore one advantageous aspect of the invention to provide a vise mechanism incorporated in a cutting machine which can simply adjust the height of a vise rod even with one hand and thus can enhance the workability of both of an operation to fix a work to be cut and an operation to cancel the fixed state of the work.

This object is achieved by a vise mechanism according to claim 1.

With this configuration, even when the locking member is placed in the second position that the second engagement member is disengaged from the first engagement member, the vise rod can be pressed by the locking member with the aid of the urging force of the urging member so that the vise rod is prevented from dropping down. Therefore, the height of the clamper can be adjusted simply with one hand, which can enhance the workability in an operation to fix the work and an operation to cancel the fixed state of the work.

The first direction, the second direction and the third direction may be orthogonal to each other.

The operating member may be a knob screwed to a screw portion formed on the locking member, so that the locking member is movable between the first position and the second position in accordance with a rotating operation of the knob.

In this case, the locking member can be operated easily in a simple manner.

The screw portion may be projected from the bracket to be screwed to the knob.

The locking member may be accommodated in a slide hole formed in the bracket. The urging member may be a coil spring disposed in the slide hole.

In this case, the urging member and the locking member can be accommodated within the bracket in a compact manner.

The first engagement member and the second engagement member may be screw members.

In this case, the height of the clamper can be finely adjusted under a condition that the second engagement member is screwed to the first engagement member.

The first engagement member may be a male screw member, and the second engagement member may be a female screw member.

### BRIEF DESCRIPTION OF THE DRAWINGS

Fig. 1 is a side view of a vise mechanism according to one embodiment of the invention.
Fig. 2A is a section view showing a state that a female screw portion of a locking pin is engaged with a vise screw in the vise mechanism.
Fig, 2B is a section view showing a state that the female screw portion is disengaged from the vise screw.
Fig. 2C is a plan view of the locking pin.

### DETAILED DESCRIPTION OF THE EXEMPLIFIED EMBODIMENTS

Exemplified embodiments of the invention will be described below in detail with reference to the accompanying drawings.

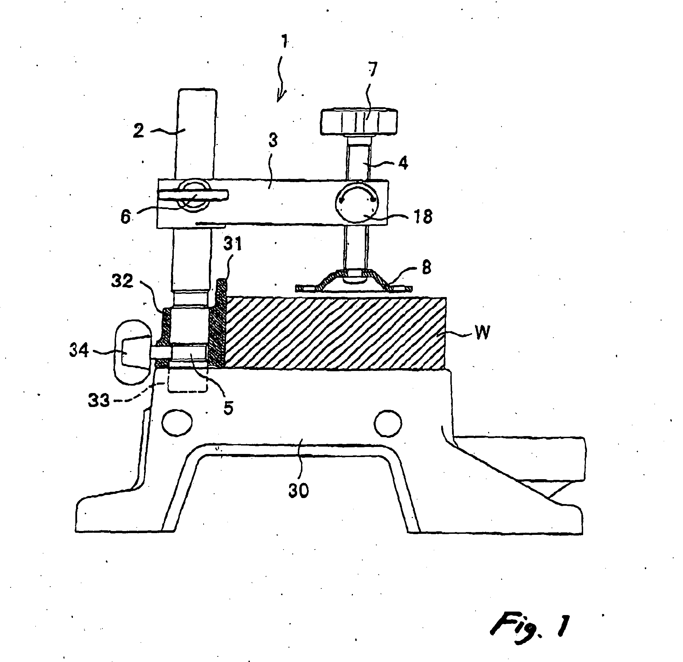

Fig. 1 shows a vise mechanism 1 according to one embodiment of the invention which is incorporated in a bench circular sawing machine, for example, The vise mechanism 1 comprises: a supporting rod 2 extending vertically in the rear side (in this specification, the right side of Fig. 1 is regarded as the front side) of a fence 31 provided on a base 30 of a bench circular sawing machine; a bracket 3 connected to the supporting rod 2 and extending horizontally; and a vise screw 4 connected to the leading end portion of the bracket 3 and adjustable in position in the vertical direction.

Although the other remaining structural portions of the bench circular sawing machine are not shown, the bench circular sawing machine has a well-known structure in which a turn table is disposed on the base 30 in a horizontally rotatable manner, and a main body including a disk-shaped sawing blade rotatable by a motor is disposed on the upper end portion of an arm disposed erect on the rear portion of the turn table in such a manner that it can be moved in the vertical direction and, normally, it is urged to its upper limit position.

The supporting rod 2 is vertically supported in such a manner that its lower end portion is penetrated through a cylindrical portion 32 provided in the rear side of the fence 31 and is inserted into a bottomed hole 33 formed in the upper face of the base 30, and a pinch screw 34 provided on the cylindrical portion 32 is screwed into the supporting rod 2 to thereby fit its leading end portion into a recessed groove 5 formed in the lower portion of the supporting rod 2, whereby the supporting rod 2 is prevented from being removed from the fence 31. The bracket 3 is an elongated plate-shaped member, while the rear end portion of the bracket 3 can be loosely fitted with the supporting rod 2. The bracket 3 is structured such that a pinch screw 6 provided on the rear end portion of the bracket 3 is screwed into the bracket 3 to press the leading end portion of the pinch screw 6 against the side face of the supporting rod 2, whereby the bracket 3 can be fixed in an arbitrary height or direction.

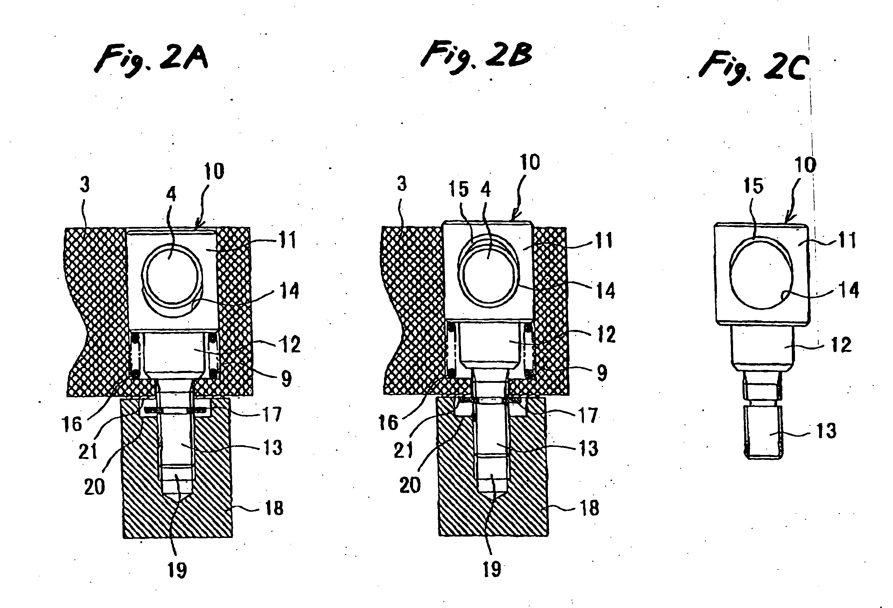

And, the vise screw 4 to be connected to the leading end portion of the bracket 3 includes a knob 7 on the upper end thereof and a disk-shaped clamper 8 on the lower end thereof, while the vise screw 4 penetrates through the leading end portion of the bracket 3. In the penetrating portion, as shown in Fig. 2, in the right and left direction thereof, there is slidably disposed a locking pin 10, while the vise screw 4 penetrates intersectingly through the locking pin 10 as well. In the following description of the locking pin and the like shown in Figs. 2A to 2C, for convenience sake, the upper side of these figures is regarded as the front direction, whereas the lower side thereof is regarded as the rear direction.

The locking pin 10 includes not only a locking portion 11 loosely inserted through a slide hole 9 opened up in the forward direction in the leading end portion of the bracket 3 but also, as shown in Fig. 2C as well, a stopper portion 12 having a smaller diameter than the locking portion 11 and a screw portion 13 having a smaller diameter than the stopper portion 12 respectively projected rearward from the locking portion 11 so as to be coaxial with each other, while the screw portion 13 is penetrated through the bracket 3 from the bottom face side of the slide hole 9 and is projected in the rearward direction. The vise screw 4 penetrates through a slot 14 which is opened up in the locking portion 11 so as to elongate in the front and rear direction. In the front half portion of the inner peripheral face of the slot 14, there is formed a female screw portion 15 adapted to be engaged with the vise screw 4.

However, within the slide hole 9, between the locking portion 11 and the bottom face of the slide hole 9, there is interposed a coil spring 16 to be mounted on the outer face of the stopper portion 12 so as to urge the locking pin 10 in the forward direction, Therefore, in a state where the vise screw 4 is penetrated through the slot 14, the female screw portion 15 of the locking pin 10 is separated from the vise screw 4 and thus only the inner peripheral face of the rear half portion of the locking pin 10 is brought into contact with the side face of the vise screw 4. Owing to such urging action of the locking pin 10 against the vise screw 4, the vise screw 4 can be held without being removed from the slot 14. Here, since the penetration hole of the vise screw 4 formed in the bracket 3 has the same circular shape as the vise screw 4, even when the vise screw 4 is pressed by the locking pin 10, the vise screw 4 can be prevented against movement in the back and forth direction.

On the other hand, a stopper ring 17 is engaged with the screw portion 13 of the locking pin 10 in the rear side of the bracket 3. In the further rear side of the locking pin 10, a knob 18 is screwed to the screw portion 13 through a screw hole 19 opened forward. Since the penetration of the vise screw 4 through the locking pin 10 prevents the locking pin 10 against rotation about its axis, when the knob 18 is operated and rotated, the locking pin 10 is screw-fed back and forth in the axial direction thereof. In the front end portion of the knob 18, there is formed a recessed portion 20 which allows the movement of the stopper ring 17 according to the screw-feeding of the locking pin 10. The front portion of the recessed portion 20 is closed by a disk-shaped stop plate 21 which is loosely inserted into the screw portion 13.

Thus, when the knob 18 is rotated to the right, the screw portion 13 is pulled in the rearward direction and the locking pin 10 is moved backward up to its fixing position shown in Fig. 2A where the stopper portion 12 comes in contact with the bottom face of the slide hole 9. In this fixing position, the female screw portion 15 of the slot 14 is engaged with the vise screw 4. On the other hand, when the knob 18 is rotated to the left, the screw portion 13 is pushed forward and the locking pin 10 is moved up to a fixation canceling position shown in Fig. 2B where the stopper ring 17 comes in contact with the stop plate 12. In this fixation canceling position, the female screw portion 15 of the slot 14 is separated from the vise screw 4 and the rear half portion of the locking pin 10 is pressed against the vise screw 4.

In the above-structured vise mechanism 1, to set and fix a work W to be cut onto the base 30, when the knob 18 is rotated to the left and the locking pin 10 is thereby moved forward up to the fixation canceling position, the vise screw 4 is pressed by the rear half portion of the slot 14 and is thereby supported without dropping down. Therefore, the vise screw 4, as it is, can be pressed down through the knob 7 until the clamper 8 comes in contact with the upper face of the work W. In this state, since the female screw portion 15 is not engaged with the vise screw 4, the vise screw 4 can be moved smoothly up to the contact position.

After contact of the clamper 8 with the work W, when the knob 18 is rotated to the right, the locking pin 10 is moved back to the fixing position and the female screw portion 15 of the slot 14 is engaged with the vise screw 4. Therefore, in the fixing position, the vertical movement of the vise screw 4 is prevented and the work W is thereby fixed. However, in this state, when the vise screw 4 is rotated through the knob 7, the vise screw 4 can be screw-fed in the vertical direction due to its threaded engagement with the female screw portion 15. Therefore, to increase the pressing force of the vise screw 4, the vise screw 4 may be rotated to the right to thereby move the vise screw 4 downward and, to decrease the pressing force of the vise screw 4, the vise screw 4 may be rotated to the left to thereby move the vise screw 4 upward, whereby the fine adjustment of the pressing force of the vise screw 4 can be attained.

With the above configuration, even in the fixation canceling position, the vise screw 4 can be pressed by the locking pin 10 and prevented from dropping down. Therefore, the height of the vise screw 4 can be adjusted simply with one hand, which can enhance the workability in an operation to fix the work W and an operation to cancel the fixed state of the work W.

Further, the knob 18 enables the operation for sliding the locking pin 10 easier. The locking pin 10 and the coil spring 16 can be accommodated in the slide hole 9 formed in the bracket 3 in a compact manner. The height of the clamper 8 can be finely adjusted under a condition that the female screw portion 15 is screwed to the vise screw 4.

In the above embodiment, the locking pin is urged forward from the slide hole of the bracket to press against the vise screw. However, on the contrary, the locking pin may be urged rearward into the slide hole to press against the vise screw. In this case, the female screw portion of the slot is formed in the inner face of the rear half portion and the rotational directions of the knob for the fixation and fixation cancellation of the locking pin are reversed.

Also, in the above embodiment, the side face of the vise rod is threaded. However, a rack or a male screw portion may be formed on a side face of a vise rod and may be engaged with a projection or a female screw portion provided on the slot of a locking pin to fix the vise rod. In this case, between the vise rod penetration hole formed in the bracket and the vise rod, a key, a chamfer or the like must be formed to thereby prevent the vise rod from being rotated.

Further, the coil spring may be replaced with a leaf spring, a Belleville spring or the like.

In the above embodiment, the slide operation of the locking pin is controlled by the knob. However, a cam may be provided in the forward side of the locking pin and the knob is coupled to the cam, so that the cam is operated so as to move the locking pin within the slide hole between the fixing position and the fixation canceling position in accordance with the rotating operation of the knob.

As a cutting machine incorporating the above-described vise mechanism may not be the bench circular sawing machine only if the machine comprises a base on which a work to be cut can be fixed. The base may be provided in the cutting machine permanently or temporarily.

Although only some exemplary embodiments of the invention have been described in detail above, those skilled in the art will readily appreciated that many modifications are possible in the exemplary embodiments without materially departing from the novel teachings and advantages of the invention. Accordingly, all such modifications are intended to be included within the scope of the invention.

## Claims

1. A vise mechanism, adapted to be incorporated in a cutting machine, comprising:
a base (30), adapted to support a work (W) to be cut by the cutting machine;
a supporting rod (2), disposed on the base and extending in a first direction;
a bracket (3), provided on the supporting rod (2) and extending in a second direction perpendicular to the first direction;
a vise rod (4), extending in the first direction while slidably penetrating the bracket (3) in the first direction;
a first engagement member, formed on a circumferential face of the vise rod (4);
a clamper (8), provided on a lower end portion of the vise rod (4) and adapted to come in contact with the work (W) supported on the base (30);
a locking member (10), provided in the bracket and formed with a slot (14) extending in a third direction perpendicular to the first direction and slidable within the bracket (3) in the third direction;
a second engagement member (15) adapted to engage with the first engagement member;
an operating member (18); and
an urging member (16);
**characterized in that**
the vise rod is idly fitted to the locking member (10), so that the locking member (10) is slidable within the bracket (3) in the third direction while intersecting with the vise rod (4),
the second engagement member (15) is formed on an inner face of the slot (14) at a first end thereof in the third direction,
the operating member (18) is operable to move the locking member in the third direction between a first position at which the first engagement member engages with the second engagement member and a second position at which an inner face of the slot at a second end thereof in the third direction comes in contact with the circumferential face of the vise rod, and the urging member (16) is adapted to urge the locking member (10) toward the second position.

2. The vise mechanism as set forth in claim 1, wherein:
the operating member (18) is a knob screwed to a screw portion (13) formed on the locking member (10), so that the locking member is moveable between the first position and the second position in accordance with a rotating operation of the knob.

3. The vise mechanism as set forth in claim 1 or 2, wherein:
the locking member (10) is accommodated in a slide hole (9) formed in the bracket (3); and
the urging member (16) is a coil spring disposed in the slide hole.

4. The vise mechanism as set forth in one of claims 1 to 3, wherein:
the first engagement member and the second engagement member are screw members.

5. The vise mechanism as set forth in one of claims 1 to 4, wherein:
the first direction, the second direction and the third direction are orthogonal to each other.

6. The vise mechanism as set forth in one of claims 1 to 5, wherein the screw portion (13) is projected from the bracket (3) to be screwed to the knob (18).

7. The vise mechanism as set forth in one of claims 1 to 6, wherein the first engagement member is a male screw member, and the second engagement member is a female screw member.

## Patentansprüche

1. Schraubzwingenmechanismus, der angepasst ist, in eine Schneidemaschine eingebunden zu werden, mit
einer Basis (30), die dazu angepasst ist, ein Werkstück (W) zu halten, das von der Schneidemaschine geschnitten werden soll,
einer Haltestange (2), die auf der Basis angeordnet ist und sich in einer ersten Richtung erstreckt,
einem Befestigungsarm (3), der auf der Haltestange (2) vorgesehen ist und sich in einer zweiten Richtung erstreckt, die senkrecht zur ersten Richtung ist,
einer Schraubzwingenstange (4), die sich in der ersten Richtung erstreckt, während sie den Befestigungsarm (3) in der ersten Richtung verschiebbar durchdringt,
einem ersten Eingreifteil, das auf einer Umfangsfläche der Schraubzwingenstange (4) ausgebildet ist,
einer Klemme (8), die an einem unteren Endbereich der Einspannstange (4) vorgesehen ist und dazu angepasst ist, in Berührung mit dem Werkstück (W) zu kommen, das auf der Basis (30) gehalten wird,
ein Verriegelungsteil (10), das im Befestigungsarm vorgesehen ist und mit einem Schlitz (14) ausgebildet ist, der sich in einer dritten Richtung erstreckt, die senkrecht zur ersten Richtung ist, und das innerhalb des Befestigungsarms (3) in der dritten Richtung verschiebbar ist,
einem zweiten Eingreifteil (15), das dazu angepasst ist, mit dem ersten Eingreifteil in Eingriff zu stehen,
einem Betätigungsbauteil (18), und
ein Drängbauteil (16),
**dadurch gekennzeichnet, dass**
die Schraubzwingenstange frei an dem Verriegelungsteil (10) angebracht ist, so dass das Verriegelungsteil (10) innerhalb des Befestigungsarms (3) in der dritten Richtung verschiebbar ist, während es sich mit der Schraubzwingenstange (4) kreuzt,
das zweite Eingreifteil (15) auf einer Innenfläche des Schlitzes (14) an einem ersten Ende davon in der dritten Richtung ausgebildet ist,
das Betätigungsbauteil (18) betätigt werden kann zum Verschieben des Verriegelungsteils in der dritten Richtung zwischen einer ersten Position, in der das erste Eingreifteil mit dem zweiten Eingreifteil in Eingriff steht, und einer zweiten Position, an der eine Innenfläche des Schlitzes an einem zweiten Ende davon in der dritten Richtung in Berührung mit der Umfangsfläche der Schraubzwingenstange kommt, und das Drängbauteil (16) dazu angepasst ist, das Verriegelungsteil (10) zur zweiten Position hin zu drängen.

2. Schraubzwingenmechanismus nach Anspruch 1, bei dem
das Betätigungsbauteil (18) ein Knopf ist, der an einen Schraubbereich (13) geschraubt ist, der auf dem Verriegelungsteil (10) ausgebildet ist, so dass das Verriegelungsteil in Übereinstimmung mit einer Drehbetätigung des Knopfes zwischen der ersten Position und der zweiten Position verschiebbar ist.

3. Schraubzwingenmechanismus nach Anspruch 1 oder 2, bei dem
das Verriegelungsteil (10) in einer Verschiebungsöffnung (9), die in dem Befestigungsarm (3) ausgebildet ist, untergebracht ist, und
das Drängbauteil (16) eine Schraubenfeder ist, die in der Verschiebungsöffnung angeordnet ist.

4. Schraubzwingenmechanismus nach einem der Ansprüche 1 bis 3, bei dem das erste Eingreifteil und das zweite Eingreifteil Schraubbauteile sind.

5. Schraubzwingenmechanismus nach einem der Ansprüche 1 bis 4, bei dem die erste Richtung, die zweite Richtung und die dritte Richtung orthogonal zueinander sind.

6. Schraubzwingenmechanismus nach einem der Ansprüche 1 bis 5,bei der der Schraubbereich (13) vom Befestigungsarm (3) hervorsteht, um an den Knopf (18) geschraubt zu werden.

7. Schraubzwingenmechanismus nach einem der Ansprüche 1 bis 6, bei der das erste Eingreifteil ein Außengewindebauteil ist und das zweite Eingreifteil ein Innengewindebauteil ist.

## Revendications

1. Mécanisme d'étau, adapté pour être incorporé dans une machine à découper, comprenant :
un socle (30), adapté pour supporter un ouvrage (W) devant être découpé par la machine à découper ;
une tige de support (2), disposée sur le socle et s'étendant dans une première direction ;
un support (3), prévu sur la tige de support (2) et s'étendant dans une deuxième direction perpendiculaire à la première direction ;
une tige d'étau (4), s'étendant dans la première direction tout en pénétrant de façon coulissante le support (3) dans la première direction ;
un premier élément de mise en prise, formé sur une face circonférentielle de la tige d'étau (4) ;
un dispositif de serrage (8), prévu sur une partie d'extrémité inférieure de la tige d'étau (4) et adapté pour venir en contact avec l'ouvrage (W) supporté par le socle (30) ;
un élément de blocage (10), prévu dans le support et comportant une fente (14) s'étendant dans une troisième direction perpendiculaire à la première direction et pouvant coulisser à l'intérieur du support (3) dans la troisième direction ;
un second élément de mise en prise (15) adapté pour se mettre en prise avec le premier élément de mise en prise ;
un élément de manoeuvre (18) ; et
un élément de poussée (16) ;
**caractérisé en ce que**
la tige d'étau est montée au repos sur l'élément de blocage (10), de telle sorte que l'élément de blocage (10) peut coulisser à l'intérieur du support (3) dans la troisième direction tout en croisant la tige d'étau (4),
le second élément de mise en prise (15) est formé sur une face interne de la fente (14) à une première extrémité de celle-ci dans la troisième direction,
l'élément de manoeuvre (18) peut être actionné pour déplacer l'élément de blocage dans la troisième direction entre une première position au niveau de laquelle le premier élément de mise en prise se met en prise avec le second élément de mise en prise et une seconde position au niveau de laquelle une face interne de la fente à la seconde extrémité de celle-ci dans la troisième direction vient en contact avec la face circonférentielle de la tige d'étau, et l'élément de poussée (16) est adapté pour pousser l'élément de blocage (10) vers la seconde position.

2. Mécanisme d'étau selon la revendication 1, dans lequel :
l'élément de manoeuvre (18) est un bouton vissé sur une partie de vissage (13) formée sur l'élément de blocage (10), de telle sorte que l'élément de blocage peut être déplacé entre la première position et la seconde position en fonction d'une opération de rotation du bouton.

3. Mécanisme d'étau selon la revendication 1 ou 2, dans lequel :
l'élément de blocage (10) est logé dans un trou de glissement (9) formé dans le support (3) ; et
l'élément de poussée (16) est un ressort hélicoïdal disposé dans le trou de glissement.

4. Mécanisme d'étau selon l'une des revendications 1 à 3, dans lequel :
le premier élément de mise en prise et le second élément de mise en prise sont des éléments de vissage.

5. Mécanisme d'étau selon l'une des revendications 1 à 4, dans lequel :
la première direction, la deuxième direction et la troisième direction sont mutuellement orthogonales.

6. Mécanisme d'étau selon l'une des revendications 1 à 5, dans lequel la partie de vissage (13) fait saillie du support (3) devant être vissé sur le bouton (18).

7. Mécanisme d'étau selon l'une des revendications 1 à 6, dans lequel le premier élément de mise en prise est un élément de vissage mâle et le second élément de mise en prise est un élément de vissage femelle.
